# EUROPÄISCHE PATENTANMELDUNG

(11) **EP 3 647 624 A1**
(43) Veröffentlichungstag der Anmeldung: **06.05.2020**
(21) Anmeldenummer: 19205378.3
(22) Anmeldetag: 25.10.2019
(51) Int. Cl.: F16F 9/32, F16F 9/36

(54) **STELLGLIED**

(30) Priorität: 29.10.2018 DE 102018218510
(71) Anmelder: STABILUS GmbH, 56070 Koblenz (DE)
(72) Erfinder: Auer, Michael, 56330 Kobern - Gondorf (DE); Neitzert, Martin, 56317 Urbach (DE); Kronz, Kathrin, 56858 Mittelstrimmig (DE); Knopp, Axel, 56337 Eitelborn (DE)
(74) Vertreter: Weickmann & Weickmann PartmbB

(57) **Zusammenfassung**

Die vorliegende Erfindung betrifft ein Stellglied (10), umfassend eine erste Verbindungseinheit, eine zweite Verbindungseinheit, eine zwischen der ersten und der zweiten Verbindungseinheit angeordnete Feder, ein Führungsrohr (12), welches innerhalb der Feder angeordnet ist, und eine Tauchstange, welche dazu eingerichtet ist, relativ zu dem Führungsrohr (12) derart verlagerbar zu sein, dass sie in das Führungsrohr (12) eintaucht, wobei die Tauchstange in einer Führungsbuchse (14) gelagert ist, dadurch gekennzeichnet, dass die Führungsbuchse (14) eine in Umfangsrichtung der Führungsbuchse (14) umlaufende Ausnehmung (18) aufweist, welche dazu eingerichtet ist, ein sich verjüngendes Ende des Führungsrohrs (12) aufzunehmen.

## Beschreibung

Die Erfindung betrifft ein Stellglied, umfassend
eine erste Verbindungseinheit zur Verbindung des Stellglieds mit einer ersten übergeordneten Baugruppe,
eine zweite Verbindungseinheit zur Verbindung des Stellglieds mit einer zweiten übergeordneten Baugruppe,
eine zwischen der ersten und der zweiten Verbindungseinheit angeordnete Feder, deren Länge gemäß einer Abstandsänderung der ersten Verbindungseinheit zu der zweiten Verbindungseinheit veränderbar ist,
ein Führungsrohr, welches innerhalb der Feder angeordnet ist und mit der ersten Verbindungseinheit zumindest translatorisch fest verbunden ist, und
eine Tauchstange, welche innerhalb der Feder angeordnet ist, welche mit der zweiten Verbindungseinheit zumindest translatorisch fest verbunden ist, und welche dazu eingerichtet ist, relativ zu dem Führungsrohr derart verlagerbar zu sein, dass sie in das Führungsrohr eintaucht,
wobei die Tauchstange in einer Führungsbuchse gelagert ist, welche an einem der ersten Verbindungseinheit abgewandten Ende des Führungsrohrs zumindest teilweise in diesem angeordnet ist und welche mit dem Führungsrohr fest verbunden ist.

Stellglieder, welche zwei teleskopisch zueinander verlagerbare Rohre umfassen und von einer Feder umgeben sind, sind im Stand der Technik allgemein bekannt. Dabei ist jedoch immer wieder das Problem aufgetreten, dass durch den Verbindungsprozess zwischen der Führungsbuchse und dem Führungsrohr das mit der Führungsbuchse verbundene Ende des Führungsrohrs über den Durchmesser der Führungsbuchse übersteht.

Im Betrieb kann diese vorstehende Kante des Führungsrohrs die Oberfläche der umgebenden Feder, insbesondere wenn die Feder beschichtet und/oder beflockt ist, beschädigen. Durch den Abrieb der Federbeschichtung können zum Beispiel Geräusche während des Betriebs entstehen. Des Weiteren kann durch die Beschädigung der Oberfläche der Feder Korrosion entstehen, welche wiederum zu einem Spannungsriss und letztendlich zum Federbruch führen kann.

Außerdem kann sich die Führungsbuchse über die Lebensdauer des Stellglieds aufgrund der Einwirkung der Feder auf das Führungsrohr aus der ursprünglichen Position lösen. Hierdurch kann beispielsweise eine Wasserdichtigkeit des Antriebs aufgehoben werden, so dass der Antrieb ausfallen kann.

Ein weiterer Nachteil von derzeitigen Verbindungen zwischen Führungsrohr und Führungsbuchse, bei welchen das Führungsrohr an einzelnen Stellen in die Führungsbuchse eingepresst wird, was auch als "Knaggen" bezeichnet wird, ist es, dass eine Qualitätssicherung dieser Verbindung über die Einpresstiefe der Einpresspunkte zu erfolgen hat, wofür ein hoher Mess- und Kostenaufwand erforderlich ist.

Es ist daher die Aufgabe der vorliegenden Erfindung, ein Stellglied bereitzustellen, welches die Nachteile des Stands der Technik beheben kann und welches eine erhöhte Verbindungsfestigkeit zwischen Führungsrohr und Führungsbuchse bereitstellen kann.

Diese Aufgabe wird durch ein gattungsgemäßes Stellglied gelöst, welches ferner dadurch gekennzeichnet ist, dass die Führungsbuchse eine in Umfangsrichtung der Führungsbuchse umlaufende Ausnehmung und das Führungsrohr ein sich verjüngendes Ende aufweist, wobei das sich verjüngende Ende des Führungsrohrs in der Ausnehmung der Führungsbuchse aufgenommen ist.

Aufgrund der Führungsbuchse des erfindungsgemäßen Stellglieds kann das der Führungsbuchse benachbarte Ende des Führungsrohrs umlaufend in die Ausnehmung der Führungsbuchse hinein deformiert werden, so dass der Außendurchmesser und der Innendurchmesser des Führungsrohrs zu dessen Ende hin verjüngt werden. Dabei kann das Material des Führungsrohrs derart deformiert werden, dass ein glatter Übergang zwischen Führungsrohr und Führungsbuchse erreicht und eine Beschädigung der umgebenden Feder vermieden werden kann.

Es sei an dieser Stelle erwähnt, dass die umgebende Feder natürlich sowohl eine Zugfeder als auch eine Druckfeder sein kann, und dass das Stellglied sowohl als passives Stellglied, zum Beispiel in Form einer Kolben-ZylinderAnordnung, z.B. einer Gasfeder, als auch als aktives Stellglied, zum Beispiel in Form eines Spindelantriebs, ausgebildet sein kann.

Aufgrund der Tatsache, dass die Führungsbuchse bei dem erfindungsgemäßen Stellglied entlang der Umfangsrichtung vollständig mit dem Führungsrohr verbunden ist, und nicht nur wie bisher an einer Mehrzahl von Verbindungspunkten, ist eine Auszugskraft, welcher die Führungsbuchse aus dem Führungsrohr widerstehen kann, deutlich gesteigert. Liegt diese Auszugskraft der Führungsbuchse aus dem Führungsrohr bei herkömmlichen Stellgliedern bei ca. 200 N, so kann die Auszugskraft der Führungsbuchse aus dem Führungsrohr bei einem erfindungsgemäßen Stellglied bei etwa 1000 N liegen.

Vorteilhafterweise kann, im Montagezustand der Führungsbuchse, eine der ersten Verbindungseinheit näher angeordnete Flanke der Ausnehmung einen flacheren Übergang von einem Außenumfang der Führungsbuchse zu einem Grund der Ausnehmung aufweisen als eine der ersten Verbindungseinheit entfernt angeordnete Flanke der Ausnehmung. Auf diese Weise kann das sich verjüngende Ende des Führungsrohrs vollständig an eine Außenkontur der Führungsbuchse angelegt werden, ohne zwischen dem Führungsrohr und der Führungsbuchse größere bzw. absichtlich vorgesehene Luftspalte zu bilden, d.h. ohne dass das Führungsrohr "harten" Formänderungen in einer Außenkontur der Führungsbuchse folgen muss. Durch den "sanfteren" Übergang können beispielsweise Kerbwirkungen in dem Material des Führungsrohrs reduziert oder sogar vermieden werden.

Dabei kann der Übergang zwischen dem Außenumfang der Führungsbuchse und der der ersten Verbindungseinheit näher angeordneten Flanke der Ausnehmung einen Winkel im Bereich von 10° bis 45°, insbesondere von 20° bis 35°, aufweisen. Es kann so ein allmählicher Übergang von dem geraden Abschnitt des Führungsrohrs in den sich verjüngenden Abschnitt des Führungsrohrs, welcher aufgrund seiner Verformung dem äußeren Verlauf der Führungsbuchse folgt, ermöglicht werden. Hierdurch kann eine Schwächung oder sogar ein Bruch des Materials des Führungsrohrs vermieden werden.

Ferner kann dabei der Übergang zwischen dem Außenumfang der Führungsbuchse und der der ersten Verbindungseinheit entfernt angeordneten Flanke der Ausnehmung einen Winkel im Bereich von 80° bis 100°, insbesondere von 90°, aufweisen. Durch diese wesentlich steilere Flanke kann dem Ende des Führungsrohrs ein Anschlag bereitgestellt sein, gegen welchen das Rohr im verbundenen Zustand anliegt.

Die Verbindung zwischen Führungsrohr und Führungsbuchse kann eine wasserdichte Verbindung bilden. Insbesondere kann, da das Führungsrohr umlaufend mit der Führungsbuchse in Eingriff steht, eine wasserdichte Verbindung zwischen dem Führungsrohr und der Führungsbuchse auch ohne zusätzliche Dichtungselemente erreicht werden. Natürlich kann an der Führungsbuchse aber auch wenigstens ein Dichtungselement, wie beispielsweise ein O-Ring, vorgesehen sein.

In einer Weiterbildung der vorliegenden Erfindung kann das Führungsrohr an seinem Innenumfang wenigstens einen nach radial innen vorstehenden Vorsprung aufweisen, welcher, im Montagezustand der Führungsbuchse, gegen ein zu der ersten Verbindungseinheit weisendes Ende der Führungsbuchse anliegt. Der Vorsprung kann dabei verhindern, dass die Führungsbuchse vor und/oder während der Verformung des Führungsrohrs weiter in das Führungsrohr hinein verlagert wird, als bis zu der durch den Vorsprung vorbestimmten Position. Ferner kann beim Einführen der Führungsbuchse in das Führungsrohr so auf einfache Weise eine vordefinierte Montageposition erreicht werden, in welcher die Ausnehmung in radialer Richtung mit dem Ende des Führungsrohrs zusammenfällt.

Dabei kann sich der wenigstens eine Vorsprung parallel zu einer Längsachse des Führungsrohrs erstrecken. Auf diese Weise kann der Vorsprung zugleich eine das Führungsrohr gegen Biegemomente stabilisierende Funktion aufweisen.

Vorteilhafterweise kann der Vorsprung mit dem Führungsrohr einstückig ausgebildet sein, so dass ein Querschnitt entlang der Umfangsrichtung des Führungsrohrs abwechselnd stärkere und schwächere Wandstärken aufweist. Die einstückige Ausbildung des Führungsrohrs mit dem wenigstens einen Vorsprung kann sich vorteilhaft auf dessen Herstellkosten und auf dessen Stabilität auswirken. Das Führungsrohr kann so beispielsweise als Strangpressprofil ausgebildet sein.

In der Ausnehmung der Führungsbuchse kann wenigstens ein nach radial außen vorstehender Vorsprung angeordnet sein, welcher mit einer Innenseite des Führungsrohrs in Eingriff steht und dazu eingerichtet ist, eine Rotation des Führungsrohrs relativ zu der Führungsbuchse zu verhindern. Insbesondere kann der in der Ausnehmung der Führungsbuchse angeordnete eine Vorsprung sich bis über die gesamte Höhe der Ausnehmung, aber vorteilhafterweise bis maximal zu der halben Höhe der Ausnehmung, erstrecken. Der wenigstens eine Vorsprung kann dabei die beiden Flanken der Ausnehmung der Führungsbuchse miteinander verbinden.

Im Montagezustand der Führungsbuchse, kann ein einem zu der ersten Verbindungseinheit weisenden Ende der Führungsbuchse benachbarter Abschnitt der Führungsbuchse einen kleineren Außenumfang aufweisen als ein einem zu der zweiten Verbindungseinheit weisenden Ende der Führungsbuchse benachbarter Abschnitt der Führungsbuchse. Der Abschnitt der Führungsbuchse, welcher den größeren Außenumfang aufweist und sich vorteilhafterweise unmittelbar an die Flanke anschließt, welche den Anschlag gegen das Ende des Führungsrohrs bildet, kann somit auch einen Anschlag für das Führungsrohr im noch unverformten Zustand bilden.

Ein in der Ausnehmung der Führungsbuchse aufgenommener Abschnitt des Führungsrohrs kann eine größere Wandstärke aufweisen als ein ein zu der ersten Verbindungseinheit weisendes Ende der Führungsbuchse umgebender Abschnitt des Führungsrohrs. Dies kann insbesondere dadurch hervorgerufen werden, dass beim Umformen des Führungsrohrs an seinem der Führungsbuchse zugeordneten Ende das Material des Führungsrohrs, auf Grund dessen Durchmesserverringerung, gestaucht werden, evtl. sogar etwas zu fließen beginnen kann. Das umgeformte Ende des Führungsrohrs kann somit an seiner Außenseite einer Kontur eines Umformungswerkzeugs, wie zum Beispiel einer Formbacke, und an seiner Innenseite der Außenkontur der Führungsbuchse folgen. Dabei kann, wie zuvor erwähnt, ein Spalt, welcher zwischen dem Umformungswerkzeug und der Führungsbuchse im vollständig angenäherten Zustand, d.h. am Ende des Umformungsprozesses, verbleibt zumindest abschnittsweise größer sein als die Wandstärke des Führungsrohrs in diesem Abschnitt vor dem Umformen.

Vorteilhafterweise kann das der ersten Verbindungseinheit abgewandte Ende des Führungsrohrs, im umgeformten Zustand, einen geringeren Außenumfang aufweist als ein sich an dieses Ende des Führungsrohrs anschließender Abschnitt der Führungsbuchse. Das bedeutet, dass das umgeformte Ende des Führungsrohrs auch an seiner Außenseite tiefer in die Ausnehmung der Führungsbuchse eintauchen kann als der sich an das umgeformte Ende des Führungsrohrs anschließende Abschnitt der Führungsbuchse. Es kann dadurch gewährleistet werden, dass kein Rand des Führungsrohrs, welches beispielsweise aus Metall, z.B. aus Aluminium, gebildet und scharfkantig sein kann, an der Führungsbuchse nach radial außen vorsteht. Der Schutz der umgebenden Feder vor einer Beschädigung durch das Führungsrohr kann so weiter verbessert werden.

Der Außenumfang des der ersten Verbindungseinheit abgewandten Endes des Führungsrohrs im umgeformten Zustand kann entlang der Umfangsrichtung des Führungsrohrs im Wesentlichen einheitlich sein. Wie bereits weiter oben erwähnt, kann eine in Umfangsrichtung vollständige Umformung des Führungsrohrs, welche eine umlaufende Verbindung des Führungsrohrs mit der Führungsbuchse erzeugt, gewährleisten, dass sämtliche Endabschnitte des Führungsrohrs, insbesondere eine umlaufende äußere Kante des Rohrendes, von dem daran anschließenden Abschnitt der Führungsbuchse in einer radialen Richtung überragt werden, so dass die Feder nicht durch das Führungsrohr beschädigt werden kann.

Ferner kann die Führungsbuchse an ihrem, im Montagezustand der Führungsbuchse, zu der ersten Verbindungseinheit weisenden Ende eine um den Außenumfang umlaufende Fase aufweisen. Diese Fase kann ein Einführen der Führungsbuchse in das Führungsrohr erleichtern. Beispielsweise kann bei einem Übermaß des Außendurchmessers des in das Führungsrohr einzuführenden Abschnitts der Führungsbuchse gegenüber einem Innendurchmesser des Führungsrohrs im unverformten Zustand ein Einführen der Führungsbuchse in das Führungsrohr durch die Fase ermöglicht werden.

Die Führungsbuchse kann beispielsweise aus einem Kunststoff, insbesondere aus PE, POM oder PA, ausgebildet sein. Die Führungsbuchse kann ferner als Spritzgußteil ausgebildet sein, wodurch die Herstellkosten der Führungsbuchse und damit des erfindungsgemäßen Stellglieds reduziert werden können. Aufgrund des weicheren Materials der Führungsbuchse im Vergleich zu dem Material des Führungsrohrs kann bei Kontakt der Führungsbuchse mit der umgebenden Feder eine Beschädigung dieser Feder vermieden werden.

Das erfindungsgemäße Stellglied wird im Folgenden anhand eines Ausführungsbeispiels mit Bezug auf die begleitenden Zeichnungen in größerem Detail beschrieben werden, in welchen
- Figur 1: eine Seitenquerschnittsansicht eines Endes eines Führungsrohrs eines erfindungsgemäßen Stellglieds darstellt, und
- Figur 2: eine Seitenquerschnittsansicht einer Führungsbuchse gemäß der vorliegenden Erfindung darstellt.

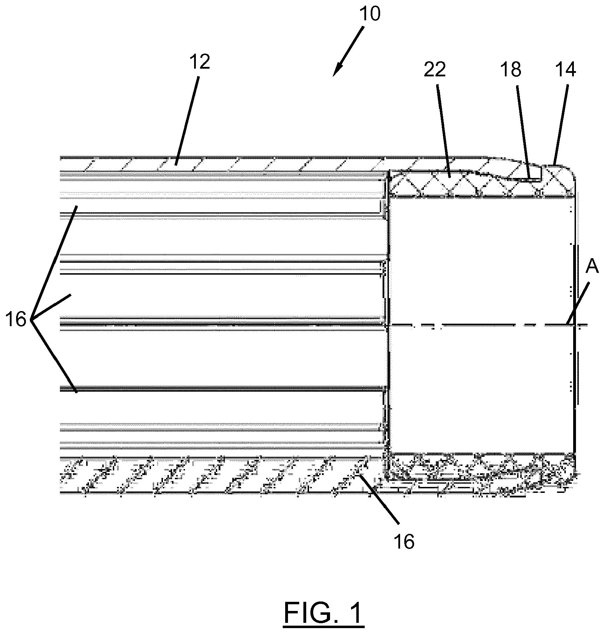

In Figur 1 ist ein Abschnitt eines allgemein mit 10 bezeichneten erfindungsgemäßen Stellglieds in einer Seitenquerschnittsansicht dargestellt. Das Stellglied 10 umfasst ein Führungsrohr 12 und eine Führungsbuchse 14. Die Führungsbuchse 14 ist in ein offenes Ende des Führungsrohrs 12 so weit eingesetzt, dass ein Abschnitt der Führungsbuchse 14, welcher weiter unten im Detail beschrieben wird, gegen das freie Ende des Führungsrohrs 12 anliegt.

Wie in dem Schnitt aus Figur 1 zu erkennen ist umfasst das Führungsrohr 12 an seiner Innenseite eine Mehrzahl von Vorsprüngen 16, welche sich hier parallel zu einer Mittelachse A des Führungsrohrs 12 und der Führungsbuchse 14 erstrecken.

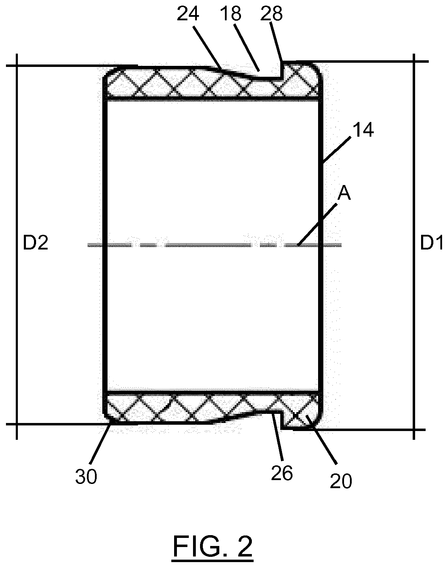

Das der Führungsbuchse 14 zugeordnete Ende des Führungsrohrs 12 ist derart umgeformt, dass es in eine Ausnehmung 18 der Führungsbuchse 14 (siehe auch Figur 2) eingreift. Es ist ferner zu erkennen, dass ein Außenumfang des umgeformten Endes des Führungsrohrs 12 einen glatten Übergang zu einem sich an dieses Ende des Führungsrohrs 12 anschließenden Abschnitt 20 der Führungsbuchse 14 (siehe Figur 2) bildet. Das heißt, es steht keine Kante des Endes des Führungsrohrs 12 weiter nach radial außen als der Abschnitt 20 der Führungsbuchse 14.

Es ist ferner in Figur 1 zu erkennen, dass der umgeformte Abschnitt des Führungsrohrs 12 eine größere Wandstärke aufweist als ein einen tiefer in dem Führungsrohr 12 angeordneten Abschnitt 22 der Führungsbuchse 14 umgebender Abschnitt des Führungsrohrs 12.

Das dem Führungsrohr 12 abgewandte Ende der Führungsbuchse 14 weist hier eine abgerundete Außenkante auf, um eine (nicht dargestellte) das Führungsrohr 12 und die Führungsbuchse 14 umgebende Feder vor Beschädigungen durch Kontakt mit der Führungsbuchse 14 zu schützen.

In Figur 2 ist die Führungsbuchse 14 nun separat, das heißt ohne Führungsrohr 12, als Schnitt dargestellt. Dabei ist zu erkennen, dass die Ausnehmung 18 eine tiefer in dem Führungsrohr 12 angeordnete (s. Figur 1) erste Flanke 24 aufweist, welche zwischen dem Abschnitt 22 der Führungsbuchse 14 und einem Grund 26 der Ausnehmung 18 einen allmählichen Übergang bildet. An dem der ersten Flanke 24 der Ausnehmung 18 entgegengesetzten Ende des Grunds 26 der Ausnehmung 18 ist eine zweite Flanke 28 angeordnet, welche hier zu dem im Wesentlichen parallel zu der Mittelachse A verlaufenden Grund 26 der Ausnehmung 18 im Wesentlichen rechtwinklig, das heißt hier in einer radialen Richtung der Führungsbuchse 14, verläuft.

Der Abschnitt 20 der Führungsbuchse 14 weist einen Außendurchmesser D1 auf, welcher größer als ein Außendurchmesser D2 des Abschnitts 22 der Führungsbuchse 14 ist. Dies ermöglicht, dass der Abschnitt 20, insbesondere die zweite Flanke 28, der Führungsbuchse 14 dem Ende des Führungsrohrs 12, welches mit der Führungsbuchse 14 verbunden werden soll, sowohl im unverformten als auch im verformten Zustand des Führungsrohrs 12 einen Anschlag bietet, wie bereits weiter oben angesprochen.

An seiner Innenseite weist die Führungsbuchse 14 ein zentrales Durchgangsloch auf, welches der Führung einer nicht dargestellten Tauchstange dient.

An ihrem in das Führungsrohr 12 einzuführenden Ende weist die Führungsbuchse 14 eine am Außenumfang umlaufende Fase 30 auf, welche der Erleichterung der Einführung der Führungsbuchse 14 in das Führungsrohr 12 dient.

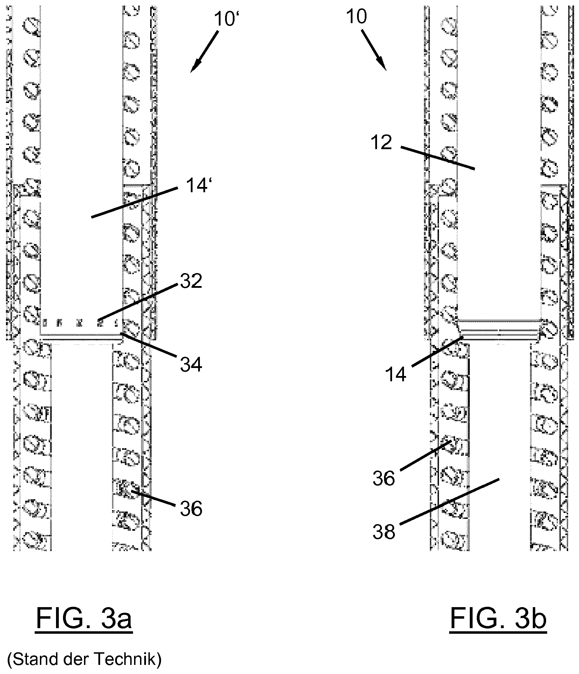

Figuren 3a und 3b zeigen eine Gegenüberstellung eines Stellglieds 10' des Stands der Technik und eines Stellglieds 10 gemäß der vorliegenden Erfindung. Dabei ist in Figur 3a zu erkennen, dass das Führungsrohr 14' des Stands der Technik eine Mehrzahl von nach innen eingepressten Verbindungspunkten 32 aufweist. Hierdurch kann das freie Ende 34 des Führungsrohrs 14' leicht nach außen gewölbt werden, so dass es eine das Führungsrohr 14' umgebende Feder 36 beschädigen kann.

Das in Figur 3b dargestellte erfindungsgemäße Stellglied 10 umfasst das Führungsrohr 12 und die Führungsbuchse 14, wie es insbesondere mit Bezug auf Figur 1 beschrieben worden ist. Das Führungsrohr 12 ist auch von einer Feder 36 umgeben, welche hier als eine Druckfeder ausgebildet ist. Mit der Führungsbuchse 14 ist ferner ein Tauchrohr 38 verbunden, welches an der Führungsbuchse 14 gleitbar gelagert ist und in das Führungsrohr 12 eintauchen kann.

Im Vergleich zu dem Stellglied 10' aus Figur 3a kann bei dem Stellglied 10 aus Figur 3b deutlich erkannt werden, dass das der Führungsbuchse 14 zugeordnete freie Ende des Führungsrohrs 12 auf Grund der erfindungsgemäßen Verbindungsweise des Führungsrohrs 12 mit der Führungsbuchse 14 eine sich zu dem Tauchrohr 38 hin verjüngende Form aufweist. Durch diese Form wird vermieden, dass Abschnitte des Führungsrohrs 12 nach radial außen vorstehen, so dass eine Beschädigung der Feder zuverlässig vermieden werden kann.

## Patentansprüche

1. Stellglied (10), umfassend
eine erste Verbindungseinheit zur Verbindung des Stellglieds (10) mit einer ersten übergeordneten Baugruppe,
eine zweite Verbindungseinheit zur Verbindung des Stellglieds (10) mit einer zweiten übergeordneten Baugruppe,
eine zwischen der ersten und der zweiten Verbindungseinheit angeordnete Feder, deren Länge gemäß einer Abstandsänderung der ersten Verbindungseinheit zu der zweiten Verbindungseinheit veränderbar ist,
ein Führungsrohr (12), welches innerhalb der Feder angeordnet ist und mit der ersten Verbindungseinheit zumindest translatorisch fest verbunden ist, und
eine Tauchstange, welche innerhalb der Feder angeordnet ist, welche mit der zweiten Verbindungseinheit zumindest translatorisch fest verbunden ist, und welche dazu eingerichtet ist, relativ zu dem Führungsrohr (12) derart verlagerbar zu sein, dass sie in das Führungsrohr (12) eintaucht,
wobei die Tauchstange in einer Führungsbuchse (14) gelagert ist, welche an einem der ersten Verbindungseinheit abgewandten Ende des Führungsrohrs (12) zumindest teilweise in diesem angeordnet ist und welche mit dem Führungsrohr (12) fest verbunden ist, **dadurch gekennzeichnet, dass**
die Führungsbuchse (14) eine in Umfangsrichtung der Führungsbuchse (14) umlaufende Ausnehmung (18) und das Führungsrohr (12) ein sich verjüngendes Ende aufweist, wobei das sich verjüngende Ende des Führungsrohrs (12) in der Ausnehmung (18) der Führungsbuchse (14) aufgenommen ist.

2. Stellglied (10) nach Anspruch 1,
**dadurch gekennzeichnet, dass**, im Montagezustand der Führungsbuchse (14), eine der ersten Verbindungseinheit näher angeordnete Flanke (24) der Ausnehmung (18) einen flacheren Übergang von einem Außenumfang (D1) der Führungsbuchse (14) zu einem Grund (26) der Ausnehmung (18) aufweist als eine der ersten Verbindungseinheit entfernt angeordnete Flanke (28) der Ausnehmung (18).

3. Stellglied (10) nach Anspruch 2,
**dadurch gekennzeichnet, dass** der Übergang zwischen dem Außenumfang (D1) der Führungsbuchse (14) und der der ersten Verbindungseinheit näher angeordneten Flanke (24) der Ausnehmung (18) einen Winkel im Bereich von 10° bis 45°, insbesondere von 20° bis 35°, aufweist.

4. Stellglied (10) nach Anspruch 2 oder 3,
**dadurch gekennzeichnet, dass** der Übergang zwischen dem Außenumfang (D2) der Führungsbuchse (14) und der der ersten Verbindungseinheit entfernt angeordneten Flanke (28) der Ausnehmung (18) einen Winkel im Bereich von 80° bis 100°, insbesondere von 90°, aufweist.

5. Stellglied (10) nach einem der Ansprüche 1 bis 4,
**dadurch gekennzeichnet, dass** das Führungsrohr (12) an seinem Innenumfang wenigstens einen nach radial innen vorstehenden Vorsprung (16) aufweist.

6. Stellglied (10) nach Anspruch 5,
**dadurch gekennzeichnet, dass** sich der wenigstens eine Vorsprung (16) parallel zu einer Längsachse (A) des Führungsrohrs (12) erstreckt.

7. Stellglied (10) nach Anspruch 5 oder 6,
**dadurch gekennzeichnet, dass** der Vorsprung (16) mit dem Führungsrohr (12) einstückig ausgebildet ist.

8. Stellglied (10) nach einem der Ansprüche 1 bis 7,
**dadurch gekennzeichnet, dass** in der Ausnehmung (18) der Führungsbuchse (14) wenigstens ein nach radial außen vorstehender Vorsprung angeordnet ist, welcher mit einer Innenseite des Führungsrohrs (12) in Eingriff steht und dazu eingerichtet ist, eine Rotation des Führungsrohrs (12) relativ zu der Führungsbuchse (14) zu verhindern.

9. Stellglied (10) nach einem der Ansprüche 1 bis 8,
**dadurch gekennzeichnet, dass**, im Montagezustand der Führungsbuchse (14), ein einem zu der ersten Verbindungseinheit weisenden Ende der Führungsbuchse (14) benachbarter Abschnitt (22) der Führungsbuchse (14) einen kleineren Außenumfang (D2) aufweist als ein einem zu der zweiten Verbindungseinheit weisenden Ende der Führungsbuchse (14) benachbarter Abschnitt (20) der Führungsbuchse (14).

10. Stellglied (10) nach einem der Ansprüche 1 bis 9,
**dadurch gekennzeichnet, dass** ein in der Ausnehmung (18) der Führungsbuchse (14) aufgenommener Abschnitt des Führungsrohrs (12) eine größere Wandstärke aufweist als ein ein zu der ersten Verbindungseinheit weisendes Ende der Führungsbuchse (14) umgebender Abschnitt des Führungsrohrs (12).

11. Stellglied (10) nach einem der Ansprüche 1 bis 10,
**dadurch gekennzeichnet, dass** das der ersten Verbindungseinheit abgewandte Ende des Führungsrohrs (12), im umgeformten Zustand, einen geringeren Außenumfang aufweist als ein sich an dieses Ende des Führungsrohrs (12) anschließender Abschnitt (20) der Führungsbuchse (14).

12. Stellglied (10) nach einem der Ansprüche 1 bis 11,
**dadurch gekennzeichnet, dass** der Außenumfang des der ersten Verbindungseinheit abgewandten Endes des Führungsrohrs (12) im umgeformten Zustand entlang der Umfangsrichtung des Führungsrohrs (12) im Wesentlichen einheitlich ist.

13. Stellglied (10) nach einem der Ansprüche 1 bis 12,
**dadurch gekennzeichnet, dass** die Führungsbuchse (14) an ihrem, im Montagezustand der Führungsbuchse (14), zu der ersten Verbindungseinheit weisenden Ende eine um den Außenumfang umlaufende Fase aufweist.

14. Stellglied (10) nach einem der Ansprüche 1 bis 13,
**dadurch gekennzeichnet, dass** die Führungsbuchse (14) aus einem Kunststoff, insbesondere aus PE, POM oder PA, ausgebildet ist.
